# FASCICULE DE BREVET EUROPEEN

(11) **EP 3 864 269 B1**
(45) Date de publication et mention de la délivrance du brevet: **17.01.2024**
(21) Numéro de dépôt: 19766052.5
(22) Date de dépôt: 16.09.2019
(51) Int. Cl.: F02B 29/04, F01P 7/14, F02M 26/30, F02M 26/28, F02D 41/06, F01P 11/16, F01P 7/16, F01P 3/00, F01P 3/12

(54) **SYSTEME DE REFROIDISSEMENT POUR MOTEUR A COMBUSTION INTERNE ET PROCEDE DE PILOTAGE ASSOCIE**
KÜHLSYSTEM FÜR EINE VERBRENNUNGSMASCHINE UND VERFAHREN ZU IHRER STEUERUNG
COOLING SYSTEM FOR A COMBUSTION ENGINE AND METHOD OF CONTROLLING THE SAME

(30) Priorité: 09.10.2018 FR 1859356
(43) Date de publication de la demande: 18.08.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: VENEZIANI, Thomas, 75015 PARIS (FR); DUBOIS, Sylvain, 78400 CHATOU (FR); CHALMETTE, Bruno, 78930 Goussonville (FR)
(74) Mandataire: Renault Group
(86) Numéro de dépôt international: PCT/EP2019/074733
(87) Numéro de publication internationale: WO 2020/074217

(56) Documents cités:
- WO-A1-2005/100759
- DE-A1- 19 633 190
- DE-T5-112014 001 021
- FR-A1- 3 049 312
- US-A1- 2014 245 735
- US-A1- 2016 123 213

## Description

### DOMAINE TECHNIQUE AUQUEL SE RAPPORTE L'INVENTION

La présente invention concerne de manière générale le domaine des systèmes de refroidissement pour moteurs à combustion interne.

Elle concerne plus particulièrement un système de refroidissement pour moteur à combustion interne, ledit moteur à combustion interne comprenant deux lignes de circulation de gaz, ledit système de refroidissement comprenant deux échangeurs thermiques respectivement connectés aux deux lignes de circulation de gaz, et un circuit dans lequel circule un fluide caloporteur.

Elle concerne aussi un procédé de pilotage du système de refroidissement.

### ARRIERE-PLAN TECHNOLOGIQUE

Lors d'un démarrage à froid d'un moteur à combustion interne d'un véhicule automobile, la température du moteur est proche de la température ambiante. Cette température ambiante est généralement différente de la température de fonctionnement optimal du moteur.

Or un moteur comprend une température de fonctionnement optimal, de façon à réduire sa consommation de carburant et ses émissions de polluants.

Les moteurs à combustion interne sont typiquement équipés d'une ligne d'admission d'air frais alimentant les cylindres du moteur. Une partie des gaz brûlés dans les cylindres circule ensuite dans une ligne d'échappement où elle est dépolluée avant d'être rejetée dans l'atmosphère. L'autre partie des gaz brulés circule dans une ligne de recirculation des gaz d'échappement et alimente les cylindres en air.

En sortie des cylindres, la température des gaz brûlés atteint plusieurs centaines de degrés.

Le document US 2011/0139133 décrit un moteur à combustion interne tel que précité, qui est en outre équipé d'un système de refroidissement particulier. Lors d'un démarrage à froid du moteur, ce système de « refroidissement » est utilisé pour réchauffer le moteur en utilisant la chaleur dégagée par les gaz brûlés.

Pour cela, le système de refroidissement comporte un échangeur de chaleur qui fait circuler un fluide caloporteur autour de la ligne de recirculation, ce qui permet au fluide caloporteur de récupérer une partie de la chaleur des gaz brûlés. Le fluide caloporteur circule ensuite autour des cylindres et leur cède une partie de la chaleur récupérée.

Ces échanges thermiques, réalisés au démarrage, permettent au moteur d'atteindre sa température de fonctionnement optimal plus rapidement. U

Le document DE112014001021T5 divulgue également un moteur similaire.

Cependant, on cherche à améliorer les performances d'un tel système de refroidissement, notamment en réduisant le temps nécessaire pour que le moteur atteigne sa température de bon fonctionnement.

### OBJET DE L'INVENTION

Pour cela, la présente invention propose un système de refroidissement tel que défini dans l'introduction, dans lequel le circuit comporte :
- un tronçon d'échange thermique qui dessert les deux échangeurs thermiques, ledit tronçon d'échange thermique présentant deux extrémités, chacune des deux extrémités étant connectée à une vanne,
- une branche principale connectée aux deux vannes et qui dessert le moteur,
- une branche de dérivation connectée aux deux vannes en parallèle du tronçon d'échange thermique et distincte de la branche principale,
et dans lequel le système de refroidissement comprend en outre :
- un contrôleur apte à piloter les deux vannes, entre un état de fonctionnement normal dans lequel les deux vannes laissent le fluide caloporteur circuler dans la branche principale et le tronçon d'échange thermique, et un état de préchauffage dans lequel les deux vannes laissent le fluide caloporteur circuler dans la branche principale et la branche de dérivation.

En état de préchauffage, les deux vannes permettent de former un circuit de refroidissement dans lequel le fluide caloporteur circule en contournant le tronçon d'échange thermique, et donc, les échanges de chaleur avec les deux échangeurs thermiques. Le fluide caloporteur circulant dans ledit circuit refroidit le moteur, pendant que le fluide situé dans les deux échangeurs thermiques monte rapidement en température grâce aux échanges thermiques avec les gaz circulant dans les échangeurs thermiques.

En pratique, les gaz brûlés pénètrent à haute température dans l'un des échangeurs thermiques par une des deux lignes de circulation de gaz. L'air frais d'admission pénètre à basse température dans l'autre échangeur thermique par l'autre des deux lignes de circulation de gaz.

Ces deux types de gaz peuvent échanger de la chaleur grâce au fluide caloporteur qui circule dans les deux échangeurs. Plus précisément, les gaz brûlés réchauffent l'air frais d'admission par l'intermédiaire du fluide caloporteur.

Cet échange thermique a deux avantages principaux : en réchauffant l'air frais circulant dans la ligne d'admission, la combustion des gaz tend à être optimale et permet de réduire les polluants à la source (combustion). La température de combustion étant plus élevée, la dépollution des gaz brûlés est amorcée plus rapidement.

De plus, il est possible de faire en sorte que la température globale du moteur à combustion interne s'élève aussi plus rapidement, ce qui lui permet d'atteindre plus rapidement sa température de fonctionnement optimal. Pour cela, le liquide caloporteur est chauffé dans l'état de préchauffage ; le lubrifiant du circuit d'huile peut aussi être réchauffé par le système de refroidissement en état de préchauffage. De plus, en augmentant la température du circuit d'huile, la viscosité du lubrifiant diminue, ce qui permet de réduire les pertes par frottement et ainsi d'améliorer les performances du moteur à combustion interne.

D'autres caractéristiques non limitatives et avantageuses du système de refroidissement conforme à l'invention, prises individuellement ou selon toutes les combinaisons techniquement possibles, sont les suivantes :
- le circuit comporte une branche de court-circuitage qui est connectée aux deux vannes en parallèle du tronçon d'échange thermique passant par les deux échangeurs thermiques. Dans l'état de préchauffage, les deux vannes laissent le fluide caloporteur circuler dans la branche de court-circuitage et dans le tronçon d'échange thermique.

Le tronçon d'échange thermique et la branche de court-circuitage forment alors une boucle sensiblement fermée de circulation de fluide. Ainsi les échanges de chaleur entre, d'une part, les gaz brulés et le fluide caloporteur et, d'autre part, le fluide caloporteur et les gaz frais sont améliorés, et la montée en température du fluide caloporteur et donc du moteur est plus rapide.

De plus :
- il est prévu une pompe dans la branche de court-circuitage. En permettant au fluide caloporteur de circuler dans la boucle sensiblement fermée, la création de points chauds localisés est évitée.

De plus :
- il est prévu une sonde de température dans le tronçon d'échange thermique.

La fin de la phase de préchauffage est décidée en fonction de la température du fluide caloporteur présent dans le tronçon d'échange thermique.

De plus :
- les deux échangeurs thermiques sont placés dans une enveloppe commune,
- chacun des deux échangeurs thermiques comporte une enveloppe distincte, et dans lequel les deux enveloppes sont reliées par un moyen de transfert de chaleur,
- les deux échangeurs thermiques comportent chacun une entrée et une sortie de fluide caloporteur, la sortie de l'un des échangeurs thermiques étant connecté à l'entrée de l'autre des échangeurs thermiques,
- les deux échangeurs thermiques comportent chacun une entrée et une sortie de fluide caloporteur, les entrées étant connectées à un même embranchement d'entrée et les sorties étant connectées à un même embranchement de sortie.

L'invention propose également un procédé de pilotage du système de refroidissement comprenant, au démarrage du moteur à combustion interne, des étapes de :
- mesure de la température du fluide caloporteur par ladite sonde de température,
- pilotage par le contrôleur des deux vannes dans l'état de préchauffage lorsque la température mesurée est inférieure à un seuil de température, et
- pilotage par le contrôleur des deux vannes dans l'état de fonctionnement normal lorsque la température mesurée est supérieure audit seuil de température.

D'autres caractéristiques non limitatives et avantageuses du procédé de pilotage d'un système de refroidissement conforme à l'invention, prises individuellement ou selon toutes les combinaisons techniquement possibles, sont les suivantes : au démarrage du moteur à combustion interne, il est prévu des étapes de :
- mesure de la température extérieure du moteur à combustion interne/ d'un véhicule équipé du moteur à combustion interne,
- pilotage par le contrôleur des deux vannes dans l'état de préchauffage lorsque la température extérieure mesurée est inférieure à un autre seuil de température, et
- pilotage par le contrôleur des deux vannes dans l'état de fonctionnement normal lorsque la température extérieure mesurée est supérieure audit autre seuil de température.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue schématique d'un moteur à combustion interne comprenant un système de refroidissement selon l'invention,
- la figure 2 représente le système de refroidissement du moteur à combustion interne,
- la figure 3 représente le système de refroidissement dans un état de préchauffage,
- la figure 4 représente le système de refroidissement dans un état de fonctionnement normal,
- les figures 5 et 6 représentent des vues schématiques de variantes des échangeurs thermiques du système de refroidissement.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

Les entrées et sorties des différents organes disposés dans le moteur sont définies relativement au sens de circulation des différents fluides.

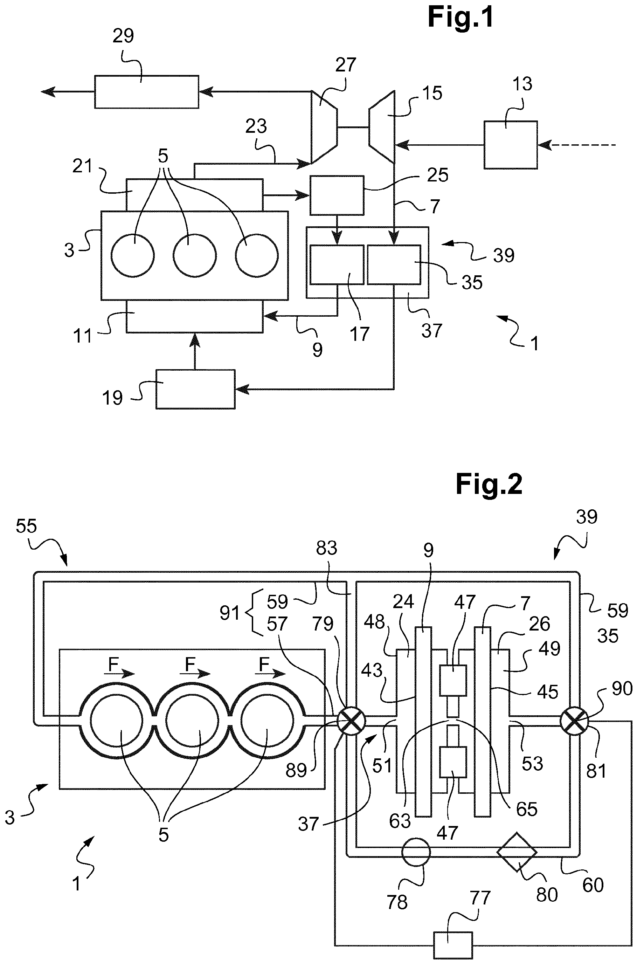

Sur la figure 1, on a représenté un moteur à combustion interne 1 (appelé moteur 1 ci-après) d'un véhicule automobile. Ce moteur 1 comprend un carter-cylindre 3 pourvu ici de trois cylindres 5. Il pourrait comporter davantage de cylindres ou au contraire un nombre réduit de cylindres. Le moteur 1 comprend en outre une culasse (non représentée).

En amont des cylindres 5, le moteur 1 comporte une ligne d'admission 7 qui prélève l'air frais dans l'atmosphère et qui fournit cet air frais aux cylindres 5 par l'intermédiaire d'un répartiteur d'air 11.

Cette ligne d'admission 7 comporte, dans le sens d'écoulement de l'air, un filtre à air 13 qui filtre l'air frais prélevé dans l'atmosphère, un compresseur principal 15 qui comprime l'air frais filtré par le filtre à air 13, un échangeur thermique 35 qui refroidit cet air frais comprimé, et un boîtier papillon 19 qui permet de réguler le débit d'air frais de suralimentation débouchant dans le répartiteur d'air 11.

En sortie des cylindres 5, le moteur 1 comporte un collecteur d'échappement 21 dans lequel débouchent les gaz qui ont été préalablement brûlés dans les cylindres 5. Le collecteur d'échappement 21 alimente en gaz brûlés une ligne d'échappement 23 ainsi qu'une ligne de recirculation 9 de gaz brûlés.

L'air frais peut aussi, en amont du compresseur principal 15, être mélangé avec des gaz brulés prélevés en aval d'un élément de dépollution 29 dans la ligne d'échappement 23. Lesdits gaz brulés sont dits gaz « basse pression ».

La ligne d'échappement 23 comprend, dans le sens d'écoulement des gaz d'échappement, une turbine 27 qui entraîne le compresseur principal 15, et l'élément de dépollution 29 des gaz brûlés, par exemple un pot catalytique.

La ligne de recirculation 9 des gaz brûlés s'étend du collecteur d'échappement 21 au répartiteur d'air 11. Les gaz brulés prélevés au niveau du collecteur d'échappement 21 et en amont de l'élément de dépollution 29 sont dits « brulés haute pression ».

La ligne de recirculation 9 permet de récupérer une partie des gaz brûlés afin d'alimenter le moteur 1 en gaz brûlés dans le but de réduire les émissions polluantes dans l'atmosphère.

Cette ligne de recirculation 9 comprend, dans le sens d'écoulement des gaz brûlés, une vanne 25 qui permet de réguler le débit des gaz brûlés et un autre échangeur thermique 17 qui refroidit les gaz brûlés, ici les gaz « brulés haute pression ».

Le boîtier papillon 19 ainsi que la vanne 25 sont contrôlés par une unité de commande (non représentée) qui, en mettant en oeuvre des instructions mémorisées, contrôle leur ouverture et régule ainsi le débit des gaz dans la ligne d'admission 7 et dans la ligne de recirculation 9.

De manière préférentielle, les deux échangeurs 17, 35 sont disposés l'un à côté de l'autre pour diminuer l'encombrement du circuit de refroidissement qui comprend les deux échangeurs.

Les deux échangeurs thermiques 17, 35 sont disposés à l'extérieur du moteur 1.

La figure 2 représente le un système de refroidissement 39 de ce moteur à combustion interne 1.

Ce système de refroidissement 39 comprend les deux échangeurs thermiques 17, 35 et un circuit 55 dans lequel circule un fluide caloporteur.

Le circuit 55 comprend une branche principale 91 qui dessert le moteur 1 et un tronçon d'échange thermique 37 traversant ou desservant les deux échangeurs thermiques 17, 35.

Le tronçon d'échange thermique 37 présente deux extrémités. Chacune des deux extrémités est connectée à une vanne 79, 81. Les vannes 79, 81 sont situées de part et d'autre des deux échangeurs thermiques 17, 35.

En pratique, la branche principale 91 comprend une pluralité de sous-branches 57, 59 permettant de raccorder les éléments desservis par le circuit 55.

Ici, une entrée 51 de l'un des échangeurs thermiques 17 est branchée à la vanne 79 qui est connectée à la sortie du moteur 1, par une sous-branche 57 de la branche principale 91 du circuit 55.

Une sortie 53 de l'autre des deux échangeurs thermiques 35 est branchée à la vanne 81 qui est connectée à l'entrée du moteur 1, par une autre sous-branche 59 de la branche principale 91 du conduit de circulation 55 de fluide caloporteur.

Enfin, selon un mode de réalisation, une sortie 63 de l'un des deux échangeurs thermiques 17 est branchée à une entrée 65 de l'autre des deux échangeurs thermiques 35.

Ainsi, les deux échangeurs thermiques 17, 35 sont branchés en série sur le tronçon d'échange thermique 37 du circuit 55.

Chacun des deux échangeurs thermiques 17, 35 comporte une enveloppe 48, 49 distincte. Chacune des deux enveloppes 48, 49 délimite une chambre dans laquelle est situé un circuit 24, 26 pour la circulation du fluide caloporteur.

Les chambres comprennent en outre chacune une conduite 43, 45, connectée à une ligne des deux lignes de circulation de gaz 7, 9.

Ainsi, le fluide caloporteur présent dans l'un des deux échangeurs thermiques 17 échange de la chaleur avec les gaz brûlés provenant de la ligne de recirculation de gaz 9. Le fluide caloporteur présent dans l'autre des deux échangeurs thermiques 35 échange de la chaleur avec l'air frais en provenance de la ligne d'admission d'air frais 7.

Comme les circuits 24, 26 sont branchés entre eux, les gaz brûlés, le fluide caloporteur et l'air frais peuvent échanger de la chaleur.

Les deux circuits 24, 26 sont ici reliés par un moyen de transfert de chaleur, par exemple, un caloduc 47. Le caloduc 47 permet un échange thermique entre le fluide caloporteur situé dans l'un des échangeurs thermiques 17 et le fluide caloporteur situé dans l'autre échangeur thermique 35. Le caloduc 47 permet ainsi d'uniformiser la température du fluide caloporteur dans les deux circuits 24, 26.

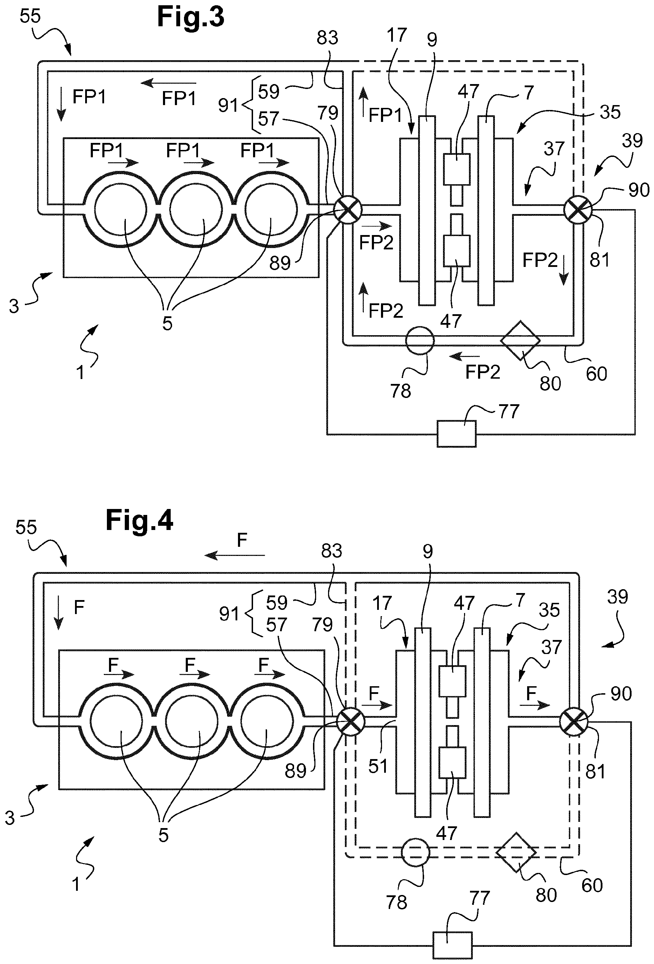

Le circuit 55 comprend en outre une branche de dérivation 83, distincte de la branche principale 91 et connectée aux deux vannes 79, 81. Plus précisément, selon le mode de réalisation représenté par les figures 2 et 3, la branche de dérivation 83 est directement connectée à la vanne 79, et est connectée à la vanne 81 par l'intermédiaire de la sous-branche 59.

Comme le montrent les figures 2 et 3, le circuit 55 comprend une branche de court-circuitage 60 qui est connectée aux deux vannes 79, 81.

Une des deux vannes 79 est ici une vanne multivoies disposée à la jonction 89 entre la sous-branche 57, la branche de dérivation 83, la branche de court-circuitage 60 et le tronçon d'échange thermique 37 en amont des deux échangeurs thermiques 17, 35. La vanne 79 contrôle le débit de fluide caloporteur circulant vers le tronçon d'échange thermique 37 et vers la branche de dérivation 83.

L'autre des deux vannes 81 est ici une vanne multivoies disposée à une jonction 90 entre le tronçon d'échange thermique 37, l'autre sous-branche 59, et la branche de court-circuitage 60, en aval des deux échangeurs thermiques 17, 35. L'autre vanne 81 contrôle le débit du fluide caloporteur circulant de façon exclusive dans la branche de dérivation 60, ou dans l'autre sous-branche 59.

Les deux vannes 79, 81 sont par exemple des électrovannes.

Le système de refroidissement comprend en outre un contrôleur 77 apte à piloter les deux vannes 79, 81.

Selon un mode de réalisation, le contrôleur 77 pilote les vannes 79, 81 entre un état de fonctionnement normal et un état de préchauffage en fonction de la température du fluide caloporteur.

Pour cela, une sonde de température 78 est située au niveau du tronçon d'échange thermique 37. La sonde de température 78 est apte à déterminer la température du fluide caloporteur situé dans le tronçon d'échange thermique 37et à la transmettre à un contrôleur 77 du système de refroidissement 39.De plus, le contrôleur 77 comprend une mémoire (non représentée) dans laquelle sont enregistrés des seuils de température Ts1, Ts2 en dessous desquels le contrôleur 77 initie l'état de préchauffage et au-dessus desquels le contrôleur 77 initie le mode de fonctionnement normal.

Comme le montre la figure 4, dans l'état de fonctionnement normal, les deux vannes 79, 81 laissent le fluide caloporteur circuler dans la branche principale 91 et dans le tronçon d'échange thermique 37 (sur les figures 3 et 4, les parties du circuit représentées en pointillées sont des parties où le fluide caloporteur ne circule pas). Les gaz brûlés et l'air frais compressé sont alors aptes à échanger notamment à transférer de la chaleur vers le fluide caloporteur par les deux échangeurs 17,35.

Comme le montre la figure 3, dans l'état de préchauffage, les deux vannes 79, 81 autorisent la circulation du fluide caloporteur dans la branche de dérivation 83 et dans la branche principale 91 en aval de la vanne 81 formant ainsi un circuit de refroidissement apte à refroidir le moteur 1.

Selon le mode de réalisation représenté dans la figure 3, la branche de dérivation 83 et la branche principale 91 partagent une portion 59 de conduit qui dans l'état de préchauffage ne voit pas de circulation de liquide caloporteur. En effet dans l'état de préchauffage, le liquide caloporteur passe dans la branche de dérivation 83 pour passer directement dans la branche principale 91.

Dans l'état de préchauffage, les vannes 79, 81 dirigent en outre le fluide caloporteur vers la branche de court-circuitage 60. Le tronçon d'échange thermique 37 et la branche de court-circuitage 60 forment alors une boucle sensiblement fermée, dans laquelle le fluide caloporteur échange de façon optimale de la chaleur avec les gaz brûlés d'une part et avec l'air d'admission d'autre part améliorant ainsi la montée en température du moteur.

De manière préférentielle, il est prévu une pompe 80 dans la branche de court-circuitage 60 afin de faire circuler le fluide caloporteur et éviter des points chauds ou à température élevée localisés dans les échangeurs thermiques 17, 35.

On peut décrire à présent le procédé de pilotage du système de refroidissement 39 du moteur 1 en référence à la figure 3.

Au démarrage de ce moteur 1, la sonde de température 78 mesure la température du fluide caloporteur dans le tronçon d'échange thermique 37 et la transmet au contrôleur 77.

La température du fluide caloporteur est alors généralement proche de la température ambiante, notamment après un arrêt prolongé. Dans cet exemple, elle est inférieure à 50°C.

Le seuil de température Ts1 correspond à une température de fonctionnement optimal du moteur 1. Le seuil de température Ts1 est par exemple compris entre 80°C et 100°C.

La température mesurée est donc inférieure au seuil de température Ts1, et le contrôleur 77 pilote les deux vannes 79, 81 dans l'état de préchauffage (figure 3).

Une partie du fluide caloporteur est isolée dans le tronçon d'échange thermique 37 et notamment dans les deux échangeurs thermiques 17, 35 et dans la branche de court-circuitage 60. Une autre partie du fluide est dirigée vers la branche de dérivation 83 et la branche principale 91 pour refroidir le moteur 1. Le sens de circulation du fluide caloporteur dans le circuit de refroidissement est indiqué par des flèches FP1. Le sens de circulation du fluide caloporteur dans la boucle sensiblement fermée est indiqué par des flèches FP2.

Dans l'état de préchauffage, le système de refroidissement 39 présente donc deux boucles de circulation de fluide caloporteur.

Une première boucle comprend la branche principale 91 de circulation de fluide caloporteur vers/depuis le moteur 1 et la banche de dérivation 83. Dans la première boucle, le fluide caloporteur circule selon le sens des flèches FP1 (figure 3) grâce à une pompe à fluide principale (non représentée). La première boucle permet donc le refroidissement du moteur 1 sans passage du fluide caloporteur par les échangeurs thermiques 17, 35.

Une deuxième boucle comprend le tronçon d'échange 37 et la branche de court-circuitage 60.

Avantageusement, le fluide caloporteur circule dans la deuxième boucle, selon le sens des flèches FP2, grâce à la pompe 80. La circulation du fluide caloporteur dans la deuxième boucle permet d'éviter la création de points chauds localisés. Le mouvement du fluide caloporteur permet, par exemple, d'éviter que la partie du fluide caloporteur présent dans l'échangeur thermique 17, et qui donc se réchauffe plus vite que le reste du fluide isolé, change d'état avant que la température mesurée ne soit supérieure ou égale au seuil de température Ts1.

Immédiatement après ce démarrage du moteur 1, les gaz brûlés pénètrent dans l'échangeur thermique 17 avec une température déjà élevée, de l'ordre par exemple de 300°C.

L'air frais, quant à lui, pénètre dans l'autre échangeur thermique 35 avec une température moins élevée que celle des gaz brûlés, de l'ordre par exemple de 10°C.

Les gaz brûlés ont donc une température supérieure à celle de l'air frais et à celle du fluide caloporteur.

Dans l'échangeur thermique 17, le fluide caloporteur réalise un échange thermique avec les gaz brûlés qui lui cèdent donc une partie de leur chaleur.

L'ensemble du fluide caloporteur isolé est ainsi réchauffé grâce aux gaz brûlés. De plus, l'échange thermique entre la partie du fluide caloporteur présente dans l'un des échangeurs thermiques 17 et la partie du fluide caloporteur présente dans l'autre des échangeurs thermiques 35 est accéléré grâce au caloduc 47.

Le fluide caloporteur isolé et réchauffé cède une partie de sa chaleur dans l'autre échangeur thermique 35. L'air frais, ressort donc réchauffé du premier échangeur thermique 35 avec une température de l'ordre de, par exemple, 50°C.

En réchauffant l'air frais, la mise en route de la dépollution des gaz d'échappement est accélérée.

En sortant de l'échangeur thermique 17, les gaz brûlés ont une température plus basse qu'en entrée, de l'ordre par exemple de 250°C.

La sonde de température 78 détermine, pour sa part, en continu, la température du fluide caloporteur dans le tronçon d'échange thermique 37. Tant que la température mesurée est inférieure au seuil de température Ts1, le contrôleur 77 maintient les vannes 79, 81 dans l'état de préchauffage.

Dès qu'elle dépasse ce seuil, alors le contrôleur 77 pilote les deux vannes 79, 81 dans l'état de fonctionnement normal représenté sur la figure 4.

Dans l'état de fonctionnement normal, une boucle de fonctionnement normal est formée par la branche principale 91 et le tronçon d'échange thermique 37. La pompe 80 prévue dans la branche de court-circuitage 60 est alors arrêtée.

Une fois les vannes 79, 81 dans l'état de fonctionnement normal, le fluide caloporteur circule dans le tronçon d'échange thermique 37 et dans la branche principale 91 du 55 pour refroidir le moteur 1, et les différents composants du moteur 1.

Sur la figure 4, des flèches F indiquent le sens de circulation du fluide caloporteur dans le circuit 55 en fonctionnement normal.

Dans ce mode de fonctionnement, les gaz brûlés pénètrent dans l'échangeur 17 avec une température de l'ordre de, par exemple, 700°C.

L'air frais pénètre dans l'autre échangeur thermique 35 avec une température comprise, par exemple, entre 180°C et 240°C (du fait de sa compression par le compresseur).

Le fluide caloporteur, quant à lui, pénètre dans les échangeurs thermiques 17, 35 avec une température de, par exemple, 100°C (il est en effet maintenu à une température relativement basse à l'aide d'un radiateur équipant le véhicule).

Les gaz brûlés et l'air frais cèdent donc une partie de leur chaleur au fluide caloporteur qui ressort réchauffé des deux échangeurs thermiques 17, 35.

En sortie de l'échangeur thermique 17, les gaz brûlés ont une température de l'ordre de, par exemple, 350°C. En sortie de l'autre échangeur thermique 35, l'air frais a une température de l'ordre de 100°C à 140°C.

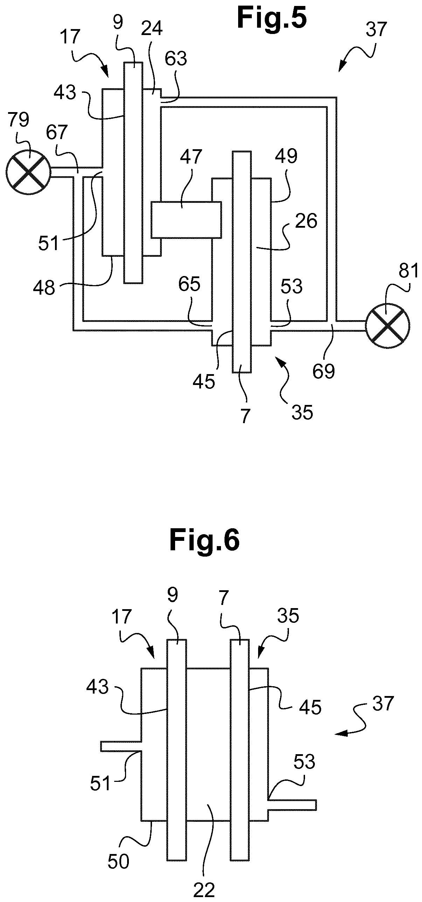

Selon une variante représentée sur la figure 5, les deux échangeurs thermiques 17, 35 sont branchés en parallèle sur la branche principale du circuit 55.

Ainsi, l'entrée 51 de l'un des échangeurs thermiques 17 et l'entrée 65 de l'autre des échangeurs thermiques 35 sont toutes deux connectées à un embranchement d'entrée 67 du tronçon d'échange thermique 37.

La sortie 63 de l'un des échangeurs thermiques 17 et la sortie 53 de l'autre des échangeurs thermiques 35 sont toutes deux connectées à embranchement de sortie 69 du tronçon d'échange thermique 37.

Le caloduc 47 permet d'uniformiser la température du fluide caloporteur dans les deux circuits 24, 26.

Selon une autre variante représentée sur la figure 7, les deux échangeurs thermiques 17, 35 sont placés dans une enveloppe commune 50. L'enveloppe commune 50 délimite une unique chambre dans laquelle est situé un circuit pour la circulation du fluide caloporteur commun 22 aux deux échangeurs thermiques 17, 35. Selon cette variante, il n'est pas nécessaire de disposer d'un moyen de transfert de chaleur car le circuit pour la circulation du fluide caloporteur commun 22 est commun aux deux échangeurs thermiques 17, 35.

A l'intérieur du circuit commun 22 des échangeurs thermiques 17, 35, le fluide caloporteur réalise donc des échanges thermiques avec les gaz brûlés qui circulent dans la ligne de recirculation 9 et avec l'air frais qui circule dans la ligne d'admission 7.

Selon un autre mode de réalisation du procédé de pilotage du système de refroidissement 39, au démarrage du moteur, une autre sonde de température détermine une température extérieure du moteur 1 du véhicule automobile lors d'une étape a). L'autre sonde de température transmet ensuite la température extérieure déterminée au contrôleur 77.

Si ladite température extérieure déterminée est inférieure à un autre seuil de température Ts2, le contrôleur 77 déclenche le fonctionnement du système de refroidissement 39 en mode préchauffage. Il maintient ledit mode de préchauffage pendant un intervalle de temps limité, par exemple 5s. Ensuite, le contrôleur 77 autorise le basculement du mode de préchauffage au mode de fonctionnement normal en activant les deux vannes 79,81.

Si la température extérieure déterminée est supérieure à l'autre seuil de température Ts2, le contrôleur 77 autorise seulement le mode fonctionnement normal.

Par défaut, le contrôleur 77 autorise le mode de fonctionnement normal.

## Revendications

1. Système de refroidissement (39) pour moteur à combustion interne (1), ledit moteur à combustion interne (1) comprenant deux lignes de circulation de gaz (7, 9), ledit système de refroidissement (39) comprenant deux échangeurs thermiques (17, 35) respectivement connectés aux deux lignes de circulation de gaz (7, 9), et un circuit (55) dans lequel circule un fluide caloporteur et qui comporte :
- un tronçon d'échange thermique (37) qui dessert les deux échangeurs thermiques (17, 35), ledit tronçon d'échange thermique (37) présentant deux extrémités, chacune des deux extrémités étant connectée à une vanne (79, 81),
- une branche principale (91) connectée aux deux vannes (79, 81) et qui dessert le moteur (1),
- une branche de dérivation (83) connectée aux deux vannes (79, 81) en parallèle du tronçon d'échange thermique (37) et distincte de la branche principale (91), et
ledit système de refroidissement (39) comprenant en outre :
- un contrôleur (77) apte à piloter les deux vannes (79, 81), entre un état de fonctionnement normal dans lequel les deux vannes (79, 81) laissent le fluide caloporteur circuler dans la branche principale (91) et le tronçon d'échange thermique (37), et un état de préchauffage dans lequel les deux vannes (79, 81) laissent le fluide caloporteur circuler dans la branche principale (91) et la branche de dérivation (83).

2. Système de refroidissement (39) selon la revendication précédente, dans lequel le circuit (55) comporte une branche de court- circuitage (60) qui est connectée aux deux vannes (79, 81) et dans lequel, dans l'état de préchauffage, les deux vannes (79, 81) laissent le fluide caloporteur circuler dans la branche de court-circuitage (60) et dans le tronçon d'échange thermique (37).

3. Système de refroidissement (39) selon l'une des revendications précédentes, dans lequel il est prévu une pompe (80) dans la branche de court-circuitage (60).

4. Système de refroidissement selon l'une des revendications précédentes, dans lequel il est prévu une sonde de température (78) dans la branche de court-circuitage (60).

5. Système de refroidissement (39) selon l'une des revendications 1 à 4, dans lequel les deux échangeurs thermiques (17, 35) sont placés dans une enveloppe commune (50).

6. Système de refroidissement (39) selon l'une des revendications 1 à 4, dans lequel chacun des deux échangeurs thermiques (17, 35) comporte une enveloppe (48, 49) distincte, et dans lequel les deux enveloppes (48, 49) sont reliées par un moyen de transfert de chaleur (47).

7. Système de refroidissement (39) selon la revendication précédente, dans lequel les deux échangeurs thermiques (17, 35) comportent chacun une entrée (51, 65) et une sortie (63, 53) de fluide caloporteur, la sortie (65) de l'un des échangeurs thermiques (17) étant connectée à l'entrée (53) de l'autre des échangeurs thermiques (35).

8. Système de refroidissement (39) selon la revendication 6, dans lequel les deux échangeurs thermiques (17, 35) comportent chacun une entrée (51, 65) et une sortie (63, 53) de fluide caloporteur, les entrées (51, 65) étant connectées à un même embranchement d'entrée (67) et les sorties (63, 53) étant connectées à un même embranchement de sortie (69).

9. Procédé de pilotage d'un système de refroidissement (39) conforme à l'une des revendications précédentes,
comprenant, au démarrage du moteur à combustion interne (1), des étapes de :
a) mesure de la température du fluide caloporteur par ladite sonde de température (78),
b) pilotage par le contrôleur (77) des deux vannes (79, 81) dans l'état de préchauffage lorsque la température mesurée est inférieure à un seuil de température (Ts1), et
c) pilotage par le contrôleur des deux vannes (79, 81) dans l'état de fonctionnement normal lorsque la température mesurée est supérieure audit seuil de température (Ts1).

10. Procédé de pilotage d'un système de refroidissement (39) conforme à l'une des revendications 1 à 8, comprenant, au démarrage du moteur à combustion interne (1), des étapes de :
a) mesure de la température extérieure du moteur à combustion interne (1)/ d'un véhicule équipé du moteur à combustion interne (1),
b) pilotage par le contrôleur (77) des deux vannes (79, 81) dans l'état de préchauffage lorsque la température extérieure mesurée est inférieure à un autre seuil de température (Ts2), et
c) pilotage par le contrôleur des deux vannes (79, 81) dans l'état de fonctionnement normal lorsque la température extérieure mesurée est supérieure audit autre seuil de température (Ts2).

## Patentansprüche

1. Kühlsystem (39) für einen Verbrennungsmotor (1), wobei der Verbrennungsmotor (1) zwei Gaszirkulationsleitungen (7, 9) beinhaltet, wobei das Kühlsystem (39) Folgendes beinhaltet: zwei Wärmetauscher (17, 35), die jeweils mit den zwei Gaszirkulationsleitungen (7, 9) verbunden sind, und einen Kreislauf (55), in dem ein Wärmeträgerfluid zirkuliert und der Folgendes umfasst:
- einen Wärmeaustauschabschnitt (37), der die zwei Wärmetauscher (17, 35) bedient, wobei der Wärmeaustauschabschnitt (37) zwei Enden aufweist, wobei jedes der zwei Enden mit einem Ventil (79, 81) verbunden ist,
- einen Hauptzweig (91), der mit den zwei Ventilen (79, 81) verbunden ist und den Motor (1) bedient,
- einen Bypass-Zweig (83), der parallel zu dem Wärmeaustauschabschnitt (37) mit den zwei Ventilen (79, 81) verbunden ist und sich von dem Hauptzweig (91) unterscheidet, und
wobei das Kühlsystem (39) ferner Folgendes beinhaltet:
- eine Steuereinheit (77), die dazu fähig ist, die zwei Ventile (79, 81) zwischen einem normalen Betriebszustand, in dem die zwei Ventile (79, 81) das Wärmeträgerfluid in dem Hauptzweig (91) und dem Wärmeaustauschabschnitt (37) zirkulieren lassen, und einem Vorwärmzustand, in dem die zwei Ventile (79, 81) das Wärmeträgerfluid in dem Hauptzweig (91) und dem Bypass-Zweig (83) zirkulieren lassen, zu steuern.

2. Kühlsystem (39) nach dem vorhergehenden Anspruch, wobei der Kreislauf (55) einen Überbrückungszweig (60) umfasst, der mit den zwei Ventilen (79, 81) verbunden ist, und wobei die zwei Ventile (79, 81) in dem Vorwärmzustand das Wärmeträgerfluid in dem Überbrückungszweig (60) und in dem Wärmeaustauschabschnitt (37) zirkulieren lassen.

3. Kühlsystem (39) nach einem der vorhergehenden Ansprüche, wobei in dem Überbrückungszweig (60) eine Pumpe (80) vorgesehen ist.

4. Kühlsystem nach einem der vorhergehenden Ansprüche, wobei in dem Überbrückungszweig (60) ein Temperaturfühler (78) vorgesehen ist.

5. Kühlsystem (39) nach einem der Ansprüche 1 bis 4, wobei die zwei Wärmetauscher (17, 35) in einem gemeinsamen Gehäuse (50) angeordnet sind.

6. Kühlsystem (39) nach einem der Ansprüche 1 bis 4, wobei jeder der zwei Wärmetauscher (17, 35) ein eigenes Gehäuse (48, 49) umfasst und wobei die zwei Gehäuse (48, 49) durch ein Wärmeübertragungsmittel (47) miteinander verbunden sind.

7. Kühlsystem (39) nach dem vorhergehenden Anspruch, wobei die zwei Wärmetauscher (17, 35) jeweils einen Einlass (51, 65) und einen Auslass (63, 53) für Wärmeträgerfluid umfassen, wobei der Auslass (65) des einen der Wärmetauscher (17) mit dem Einlass (53) des anderen der Wärmetauscher (35) verbunden ist.

8. Kühlsystem (39) nach Anspruch 6, wobei die zwei Wärmetauscher (17, 35) jeweils einen Einlass (51, 65) und einen Auslass (63, 53) für Wärmeträgerfluid umfassen, wobei die Einlässe (51, 65) mit einer gleichen Einlassverzweigung (67) verbunden sind und die Auslässe (63, 53) mit einer gleichen Auslassverzweigung (69) verbunden sind.

9. Verfahren zum Steuern eines Kühlsystems (39) nach einem der vorhergehenden Ansprüche,
das beim Starten des Verbrennungsmotors (1) folgende Schritte beinhaltet:
a) Messen der Temperatur des Wärmeträgerfluids durch den Temperaturfühler (78),
b) Steuern, durch die Steuereinheit (77), der zwei Ventile (79, 81) in dem Vorwärmzustand, wenn die gemessene Temperatur kleiner als ein Temperaturschwellenwert (Ts1) ist, und
c) Steuern, durch die Steuereinheit, der zwei Ventile (79, 81) in dem normalen Betriebszustand, wenn die gemessene Temperatur größer als der Temperaturschwellenwert (Ts1) ist.

10. Verfahren zum Steuern eines Kühlsystems (39) nach einem der Ansprüche 1 bis 8, das beim Starten des Verbrennungsmotors (1) folgende Schritte beinhaltet:
a) Messen der Außentemperatur des Verbrennungsmotors (1)/eines Fahrzeugs, das mit dem Verbrennungsmotor (1) ausgerüstet ist,
b) Steuern, durch die Steuereinheit (77), der zwei Ventile (79, 81) in dem Vorwärmzustand, wenn die gemessene Außentemperatur kleiner als ein anderer Temperaturschwellenwert (Ts2) ist, und
c) Steuern, durch die Steuereinheit, der zwei Ventile (79, 81) in dem normalen Betriebszustand, wenn die gemessene Außentemperatur größer als der andere Temperaturschwellenwert (Ts2) ist.

## Claims

1. Cooling system (39) for an internal combustion engine (1), said internal combustion engine (1) comprising two gas circulation lines (7, 9), said cooling system (39) comprising two heat exchangers (17, 35), respectively connected to the two gas circulation lines (7, 9), and a circuit (55), in which a heat transfer fluid circulates and which comprises:
- a heat exchange section (37), which serves the two heat exchangers (17, 35), said heat exchange section (37) having two ends, each of the two ends being connected to a valve (79, 81);
- a main branch (91) connected to the two valves (79, 81) and serving the engine (1);
- a bypass branch (83) connected to the two valves (79, 81) parallel to the heat exchange section (37) and separate from the main branch (91); and
said cooling system (39) further comprising:
- a controller (77) capable of controlling the two valves (79, 81), between a normal operating state, in which the two valves (79, 81) leave the heat transfer fluid to circulate in the main branch (91) and the heat exchange section (37), and a preheating state, in which the two valves (79, 81) leave the heat transfer fluid to circulate in the main branch (91) and the bypass branch (83).

2. Cooling system (39) according to the preceding claim, wherein the circuit (55) comprises a short-circuiting branch (60), which is connected to the two valves (79, 81) and in which, in the preheating state, the two valves (79, 81) leave the heat transfer fluid to circulate in the short-circuiting branch (60) and in the heat exchange section (37).

3. Cooling system (39) according to any one of the preceding claims, wherein a pump (80) is provided in the short-circuiting branch (60).

4. Cooling system according to any one of the preceding claims, wherein a temperature probe (78) is provided in the short-circuiting branch (60).

5. Cooling system (39) according to any one of Claims 1 to 4, wherein the two heat exchangers (17, 35) are placed in a common enclosure (50).

6. Cooling system (39) according to any one of Claims 1 to 4, wherein each of the two heat exchangers (17, 35) comprises a separate enclosure (48, 49), and wherein the two enclosures (48, 49) are connected by a heat transfer means (47).

7. Cooling system (39) according to the preceding claim, wherein the two heat exchangers (17, 35) each comprise a heat transfer fluid input (51, 65) and output (63, 53), the output (65) of one of the heat exchangers (17) being connected to the input (53) of the other one of the heat exchangers (35).

8. Cooling system (39) according to Claim 6, wherein the two heat exchangers (17, 35) each comprise a heat transfer fluid input (51, 65) and output (63, 53), the inputs (51, 65) being connected to the same input branch pipe (67) and the outputs (63, 53) being connected to the same output branch pipe (69).

9. Method for controlling a cooling system (39) according to any one of the preceding claims, comprising, upon start-up of the internal combustion engine (1), the following steps:
a) measuring the temperature of the heat transfer fluid using said temperature probe (78);
b) controlling, by the controller (77), the two valves (79, 81) in the preheating state when the measured temperature is less than a temperature threshold (Ts1); and
c) controlling, by the controller, the two valves (79, 81) in the normal operating state when the measured temperature is greater than said temperature threshold (Ts1).

10. Method for controlling a cooling system (39) according to any one of Claims 1 to 8, comprising, upon start-up of the internal combustion engine (1), the following steps:
a) measuring the temperature outside the internal combustion engine (1)/a vehicle equipped with the internal combustion engine (1);
b) controlling, by the controller (77), the two valves (79, 81) in the preheating state when the measured outside temperature is less than another temperature threshold (Ts2); and
c) controlling, by the controller, the two valves (79, 81) in the normal operating state when the measured outside temperature is greater than said other temperature threshold (Ts2).
